# EUROPÄISCHE PATENTANMELDUNG

(11) **EP 1 733 947 A2**
(43) Veröffentlichungstag der Anmeldung: **20.12.2006**
(21) Anmeldenummer: 06009798.7
(22) Anmeldetag: 12.05.2006
(51) Int. Cl.: B62B 3/02

(54) **Einkaufswagen**

(30) Priorität: 17.06.2005 DE 102005028229
(71) Anmelder: Dürr, Willi, 76275 Ettlingen (DE)
(72) Erfinder: Dürr, Willi, 76275 Ettlingen (DE)
(74) Vertreter: Dimmerling, Heinz

(57) **Zusammenfassung**

Ein Einkaufswagen, mit einem auf einem fahrbaren Gestell 1 angeordneten Warenkorb 2, ist dadurch gekennzeichnet, dass der Warenkorb 2 und das Gestell 1 zusammenklappbar sind.

## Beschreibung

Die Erfindung betrifft einen Einkaufswagen nach dem Oberbegriff des Anspruchs 1, mit einem auf einem fahrbaren Gestell angeordneten Warenkorb.

Derartige Einkaufswagen sind im Stand der Technik hinlänglich bekannt und werden Kunden insbesondere in Selbstbedienungs-Warenhäusern regelmäßig zur Verfügung gestellt.

Wenngleich mittels der bekannten Einkaufswagen Waren auch problemlos eingekauft und zu einem Kraftfahrzeug transportiert werden können, so besteht schon bei der Ankunft am Auto das Problem des Umladens der Ware in den Kofferraum in einzelne Behältnisse und ebenso das Umständliche Auslanden am Zielort, welcher regelmäßig eine Garage oder ein Stellplatz in der Nähe der Wohnung der einkaufenden Person sein dürfte, das Problem, die Waren in die Wohnung zu transportieren. Denn am Zielort steht in der Regel kein Einkaufswagen zur Verfügung.

Darüber hinaus gestaltet sich das Einkaufen auch in solchen Warenhäusern problematisch, welche keine Einkaufswagen zur Verfügung stellen. Hier wie am Ort der Wohnung ist es erforderlich, die Waren in Taschen oder Tüten zu transportieren. Es wäre somit wünschenswert, einen Einkaufswagen stets zur Verfügung zu haben.

Es ist Aufgabe der Erfindung, einen eingangs genannten Einkaufswagen derart auszubilden, dass er in einem Kraftfahrzeug mitgeführt werden kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Einkaufswagen, mit einem auf einem fahrbaren Gestell angeordneten Warenkorb, dadurch gekennzeichnet, dass der Warenkorb und das Gestell zusammenklappbar sind.

Dadurch, dass der Warenkorb und das Gestell zusammenklappbar sind, lässt sich der Einkaufswagen problemlos im Kofferraum eines Kraftfahrzeuges unterbringen. Der Einkaufswagen kann somit stets im Kraftfahrzeug mitgeführt werden, ohne dass er die Nutzung des Kofferraums in besonderer Weise behindern würde. Es ist somit möglich, in Warenhäusern, die keine Einkaufswagen zur Verfügung stellen, den Einkaufswagen aus dem Kofferraum des Kraftfahrzeuges zu nehmen, den Warenkorb und das Gestell auseinanderzuklappen, und wie einen bekannten Einkaufswagen zu benutzen. Dasselbe gilt auch für den Ort der Wohnung der einkaufenden Person. Auch hier kann der Einkaufswagen auseinandergeklappt werden und die Waren dann in ihm zur Wohnung transportiert werden.

Sehr vorteilhaft ist eine Ausführungsform der Erfindung, bei der der Warenkorb lösbar befestigt auf dem Gestell angeordnet ist. Hierdurch lässt sich der Warenkorb unabhängig vom Gestell benutzen. Insbesondere kann er ohne Fahrgestell in den Kofferraum eines Kraftfahrzeuges gehoben werden.

Besonders vorteilhaft ist es, wenn der Warenkorb mittels Schnellverschlüssen an dem Gestell befestigt ist. Die Schnellverschlüsse können vorzugsweise als Spannschlösser ausgebildet sein. Spannschlösser lassen sich zum einen sehr einfach betätigen und schließen zum anderen sehr zuverlässig.

Dadurch, dass der Warenkorb mittels Schnellverschlüssen am Gestell befestigt ist, lässt er sich auf einfache Weise von dem Gestell entfernen, wodurch er im befüllten Zustand vom Gestell gehoben und in den Kofferraum gehoben werden kann. Hierdurch sind die Waren auch während der Fahrt mit dem Kraftfahrzeug gut verstaut, so dass sie nicht im Kofferraum umhertliegen.

Der Warenkorb beziehungsweise das Fahrgestell lassen sich jederzeit separat verwenden. Befindet sich der Warenkorb nicht mehr auf dem Gestell, kann das Gestell zum Transport von sperrigen Gütern oder Getränkekästen verwendet werden.

Statt den Warenkorb vom Gestell zu nehmen könnte der Warenkorb auch auf dem Gestell verbleiben und das Gestell zusammengeklappt werden. Auch in diesem Zustand ließe sich der Einkaufswagen im Kofferraum eines Kraftfahrzeuges transportieren.

Am Zielort kann der Warenkorb mit den darin befindlichen Waren aus dem Kofferraum des Kraftfahrzeuges genommen werden und das Gestell auseinandergeklappt werden, so dass die Waren in die Wohnung gefahren werden können.

Bei einer weiteren besonderen Ausführungsform der Erfindung ist vorgesehen, dass ein U-förmiger Bügel vorhanden ist, welcher derart am Einkaufswagen befestigt ist, dass er in einer Position arretierbar ist, in der sich der Steg des Bügels in einem Abstand vom Einkaufswagen befindet. Ist der Bügel in der genannten Position arretiert, lässt sich der Einkaufswagen sehr gut bewegen, da der Bügel wie ein Handgriff eines herkömmlichen Einkaufswagens funktioniert.

Besonders vorteilhaft ist es, wenn der Warenkorb derart zusammenklappbar ist, dass er im zusammengeklappten Zustand auf dem Fahrgestell eine ebene Oberfläche bildet. Hierdurch kann der Einkaufswagen als Ablagetisch verwendet werden. Zudem kann er auch zum Transport von beispielsweise sperrigen Gütern, welche nicht in den Warenkorb passen würden, verwendet werden. Aber auch Getränkekästen lassen sich auf einer solchen ebenen Fläche sehr gut transportieren.

Der große Vorteil des erfindungsgemäßen Einkaufswagens ist, dass man seinen eigenen Einkaufswagen zusammengeklappt beispielsweise im Kofferraum seines Autos zum Einkaufen mitführen kann und somit unabhängig davon ist, ob am Zielort Einkaufswagen vorhanden sind oder nicht. Am Zielort nimmt man den zusammengeklappten Einkaufswagen aus dem Kofferraum und klappt mit den Händen links und rechts das Fahrgestell aus. Danach entfaltet man den Warenkorb und zieht den am Fahrgestell oder am Warenkorb befestigten Bügel heraus und fährt zum Einkaufen. Der Bügel ist zum Schieben oder Ziehen des Einkaufswagens geeignet.

Nachdem man den Einkauf getätigt hat, fährt man mit dem befüllten Einkaufswagen zum Kraftfahrzeug. Am Kraftfahrzeug kann man das Fahrgestell einklappen und den befüllten Warenkorb in den Kofferraum heben. Hierdurch entfällt in vorteilhafter Weise das umständliche Umladen der eingekauften Waren in verschiedene Behältnisse im Kofferraum. Des Weiteren entfällt das Zurückbringen des Einkaufswagens, wie es bei herkömmlichen Einkaufswagen erforderlich ist.

Am Wohnort nimmt man den befüllten Warenkorb aus dem Kraftfahrzeug, klappt das Fahrgestell wieder aus und kann dann den eigenen Einkaufswagen in die Wohnung oder ins Haus schieben oder ziehen.

Ein großer Vorteil ist auch, dass man den erfindungsgemäßen Einkaufswagen mit einem zusammengeklappten Warenkorb als Ablage jeglicher Art benutzen kann.

Der erfindungsgemäße Einkaufswagen macht das Einkaufen leichter und bequemer und spart mehrere Arbeitsgänge wie beispielsweise das Umladen der Waren vom Warenkorb in den Kofferraum eines Kraftfahrzeuges, das Holen und Zurückbringen eines Einkaufswagens. Des Weiteren brauchen keine schweren Waren mehr in die Wohnung getragen werden. Im Prinzip handelt es sich bei dem erfindungsgemäßen Einkaufswagen um eine Klappbox mit integriertem Fahrgestell oder Klappwagen.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

### Es zeigt

- Figur 1: eine schematische Darstellung eines erfindungsgemäßen Einkaufswagens in perspektivischer Ansicht,
- Figur 2: eine schematische Darstellung eines Gestells eines erfindungsgemäßen Einkaufswagens in perspektivischer Ansicht,
- Figur 3: eine schematische Darstellung eines Gestells mit zusammengeklapptem Warenkorb in perspektivischer Ansicht,
- Figur 4: eine schematische Darstellung eines erfindungsgemäßen Einkaufswagens mit zusammengeklapptem Warenkorb und zusammengeklapptem Gestell in perspektivischer Ansicht,
- Figur 5: eine schematische Darstellung eines erfindungsgemäßen Einkaufswagens mit zusammengeklapptem Gestell und ausgeklapptem Warenkorb in perspektivischer Ansicht und
- Figur 6: eine schematische Darstellung einer weiteren Ausführungsform eines erfindungsgemäßen Einkaufswagens in Seitenansicht.

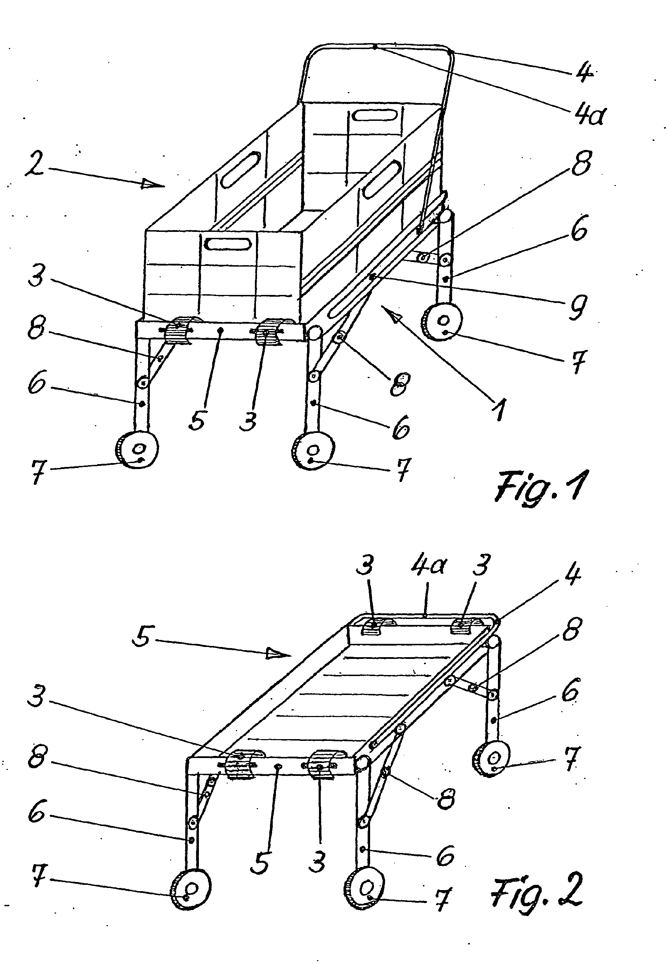

Wie Figur 1 entnommen werden kann, ist auf einem Gestell 1 ein Warenkorb 2 angeordnet. Der Warenkorb 2 ist mittels Spannschlössern 3 am Gestell 1 befestigt.

Das Gestell 1 besteht im Wesentlichen aus einem rechteckförmigen Rahmen 5, welcher an seinen vier Ecken Stützen 6 aufweist, welche an ihren dem Rahmen 5 abgewandten Enden Räder 7 haben. Die Stützen 6 sind schwenkbar am Rahmen 5 befestigt. Zur Arretierung der Stützen 6 sind zwischen den Stützen 6 und dem Rahmen 5 Kniehebel 8 angeordnet.

Am Rahmen 5 ist des Weiteren ein U-förmiger Bügel 4 befestigt, welcher verschiebbar in einem Langloch 9 angeordnet ist. An einem Ende des Langlochs 9 lässt sich der Bügel 4 arretieren, so dass sich der Steg 4a des Bügels 4 in einem Abstand vom Warenkorb 2 befindet und als Handgriff für den Einkaufswagen dient.

Wie Figur 2 entnommen werden kann, lässt sich der Warenkorb 2 nach Lösen der Spannschlösser 3 vom Gestell 1 entfernen. Die sich im Warenkorb 2 befindlichen Waren können dann im Warenkorb 2 weggetragen werden. Zurück bleibt dann das in Figur 2 dargestellte Gestell, welches noch zum Transport von beispielsweise sperrigen Gütern oder Getränkekästen verwendet werden kann.

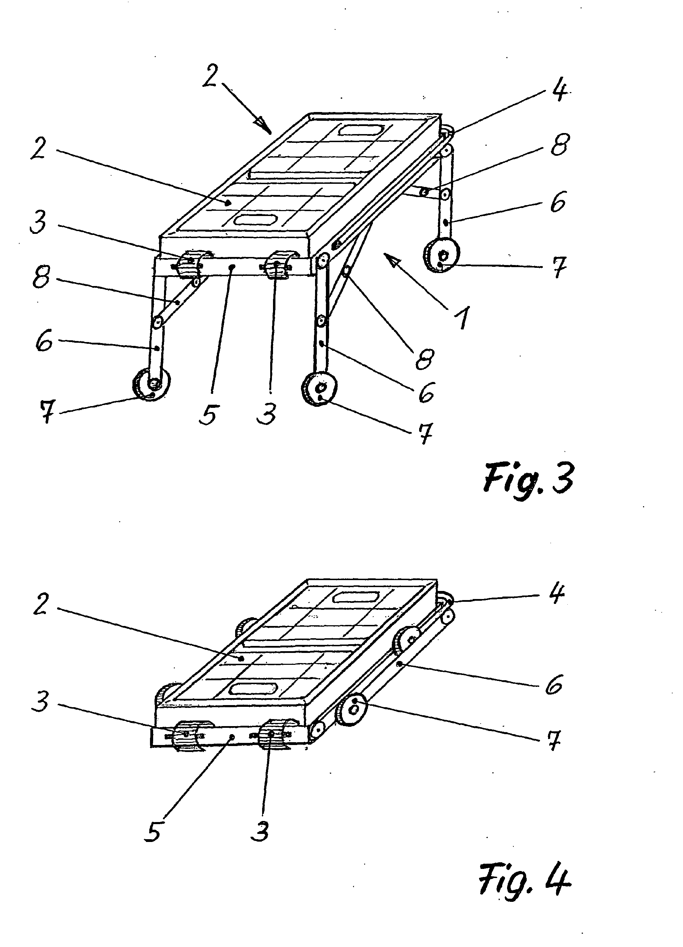

Der Warenkorb 2 lässt sich so zusammenklappen, dass die Seitenwände sich vollständig innerhalb des Rahmens 5 befinden. Wie Figur 3 entnommen werden kann, entsteht hierdurch eine ebene Fläche, welche als Ablage dienen kann oder auf der beispielsweise ebenfalls sperrige Güter transportiert werden können.

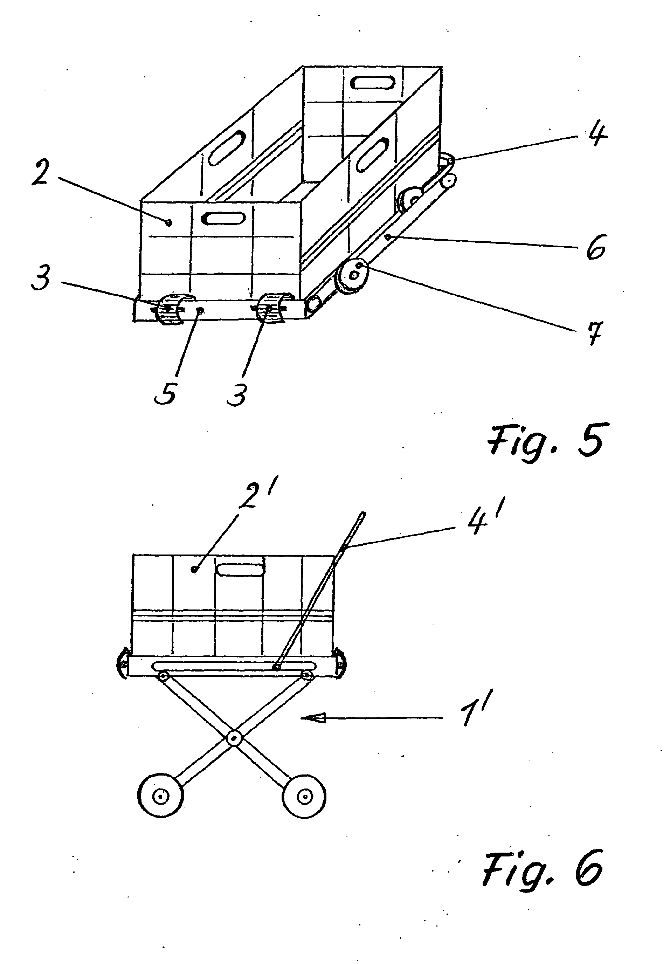

Wie Figur 4 entnommen werden kann, lässt sich das Gestell 1 ebenfalls vollständig zusammenklappen, so dass der Einkaufswagen nur noch den Raum einer rechteckförmigen Platte beansprucht. Der zusammengeklappte Einkaufswagen lässt sich daher problemlos in einem Kraftfahrzeug transportieren beziehungsweise gegebenenfalls in der Wohnung aufbewahren. Der Warenkorb muss somit nicht in jedem Fall lösbar mit dem Gestell verbunden sein.

Wie Figur 5 entnommen werden kann, lässt sich auch nur das Gestell 1 zusammenklappen, so dass der Warenkorb 2 weiter zur Aufbewahrung von Waren dienen kann. Der Warenkorb 2 beziehungsweise der Einkaufswagen mit zusammengeklapptem Gestell 1 lässt sich somit mit den darin befindlichen Waren im Kofferraum eines Kraftfahrzeuges transportieren.

Die in Figur 6 dargestellte Ausführungsform entspricht im Wesentlichen der in den Figuren 1 bis 5 dargestellten Ausführungsform. Gleiche Elemente sind daher mit denselben Bezugszeichen versehen; zur Unterstützung weisen sie jedoch Strich auf. Statt eines Kniehebel-Fahrgestells ist das Gestell 1' als Hubschere-Fahrgestell ausgebildet.

## Patentansprüche

1. Einkaufswagen, mit einem auf einem fahrbaren Gestell (1) angeordneten Warenkorb (2),
**dadurch gekennzeichnet,**
**dass** der Warenkorb (2) und das Gestell (1) zusammenklappbar sind.

2. Einkaufswagen nach Anspruch 1,
**dadurch gekennzeichnet,**
**dass** der Warenkorb (2) lösbar befestigt auf dem Gestell (1) angeordnet ist.

3. Einkaufswagen nach Anspruch 1 oder 2,
**dadurch gekennzeichnet,**
**dass** der Warenkorb (2) mittels Schnellverschlüssen (3) an dem Gestell (1) befestigt ist.

4. Einkaufswagen nach einem der Ansprüche 1 bis 3,
dass ein U-förmiger Bügel (4) vorhanden ist, welcher derart am Einkaufswagen befestigt ist, dass er in einer Position arretierbar ist, in der sich der Steg (4a) des Bügels (4) in einem Abstand vom Einkaufswagen befindet.
